# FASCICULE DE BREVET EUROPEEN

(11) **EP 3 772 804 B1**
(45) Date de publication et mention de la délivrance du brevet: **04.12.2024**
(21) Numéro de dépôt: 20189891.3
(22) Date de dépôt: 06.08.2020
(51) Int. Cl.: H02K 11/21, H02K 11/215, E04H 4/08, E04H 4/10, H02K 7/116

(54) **ENSEMBLE DE MOTORISATION ET D'ENTRAINEMENT D'UNE COUVERTURE D'UN BASSIN DE PISCINE**
MOTORISIERUNGS- UND ANTRIEBSEINHEIT EINER ABDECKUNG FÜR EIN SCHWIMMBADBECKEN
MOTOR AND DRIVE ASSEMBLY FOR A SWIMMING POOL COVER

(30) Priorité: 08.08.2019 FR 1909071
(43) Date de publication de la demande: 10.02.2021
(73) Titulaire: Unicum Transmission de Puissance, 42150 La Ricamarie (FR)
(72) Inventeur: SMANIA, Marco, 69007 LYON (FR)
(74) Mandataire: Cabinet Laurent & Charras

(56) Documents cités:
- CN-U- 203 632 460
- DE-A1- 4 431 152
- FR-A1- 2 870 874
- FR-A1- 3 017 892
- US-A- 5 500 564

## Description

### DOMAINE TECHNIQUE

L'invention se rattache au secteur technique des ensembles de motorisation et d'entrainement d'une couverture d'un bassin de piscine.

### ART ANTÉRIEUR

Il est connu de l'état de la technique d'utiliser des capteurs de positions électroniques afin de déterminer le nombre de tours réalisés par le groupe motoréducteur et de gérer les fins de course d'une couverture d'un bassin de piscine.

Cependant, les capteurs électroniques (inductifs, effet hall, etc.) sont sensibles aux surtensions assez fréquentes dans l'application en milieu humide (foudre, instabilité du secteur, etc.).

Il est connu du brevet FR 3 017 892, une première solution innovante au problème principal des capteurs de position électroniques dans les motoréducteurs pour couvertures de piscine.

Comme il ressort de l'enseignement du brevet FR 3 017 892, l'ensemble de motorisation est du type de ceux comportant au moins un groupe motoréducteur, comprenant un moteur électrique, un réducteur, un arbre de sortie fixe et un flasque apte à être monté à l'intérieur d'un rouleau, pour l'entraînement de la couverture d'un bassin de piscine, en vue de l'ouverture ou de la fermeture de ladite couverture. Ledit ensemble comporte en outre un corps fixe recevant le moteur et le réducteur, ainsi que des moyens de détection de la position du corps fixe, par rapport au flasque entraîné en rotation, afin de déterminer le nombre de tours réalisés par le groupe motoréducteur et de gérer les fins de course de la couverture du bassin de piscine.

Selon l'enseignement du brevet FR 3 017 892, les moyens de détection de la position du corps fixe, sont constitués par un interrupteur présentant une tige montée sur un ressort et équipée en bout, d'une roulette qui vient en contact avec des têtes de vis fixées circulairement sur le flasque, en position de débordement afin d'obliger la roulette assujettie à la tige de l'interrupteur, à se rétracter à chaque passage de vis pour provoquer la fermeture ou l'ouverture d'un contact électrique.

Cependant, à chaque passage de la roulette sur une tête de vis, se produit un léger choc. De plus, l'ensemble de l'interrupteur, avec la tige à roulette, est relativement encombrant, et d'un coût élevé.

Le brevet FR 3 057 891 s'est proposé de résoudre ces inconvénients en simplifiant, de manière significative, les moyens de détection de la position du corps fixe, avec pour objectif de diminuer les coûts, en simplifiant la fabrication et le montage, tout en améliorant le fonctionnement.

Pour résoudre un tel problème, et selon le brevet FR 3 057 891, les moyens de détection comprennent au moins un interrupteur solidaire du corps du motoréducteur et présentant un doigt apte à prendre appui sur une couronne présentant facialement et alternativement, à intervalles réguliers, une série de formes en creux et en relief aptes à provoquer un déplacement du doigt lors de la rotation du flasque.

Cette solution trouve une application dans le cadre d'un motoréducteur immergé, mais également dans le cadre d'un motoréducteur hors sol, ou installé dans une fosse, et plus généralement dans tous les cas où il est nécessaire de connaître le nombre de tours effectués par un motoréducteur.

La couronne présente avantageusement, directement lors de sa fabrication, les formes en creux et en relief, ladite couronne pouvant être rapidement fixée par tous moyens connus et appropriés sur le flasque, de manière fixe ou amovible.

Les brevets FR 3 017 892 et FR 3 057 891 ont remédiés les inconvénients des motoréducteurs à capteurs de position électroniques par l'agencement d'un composant complètement passif, à savoir un capteur mécanique.

La fiabilité des motoréducteurs a donc été très nettement améliorée. Cependant, les inconvénients des capteurs mécaniques résident dans leurs dimensions, la précision de leur signal et leur coût, qui peuvent encore être améliorés.

Les documents FR2870874A1 et US5500564A décrivent des systèmes permettant de déterminer le nombre de tours effectués par un motoréducteur. Cependant ces systèmes nécessitent également d'être améliorés.

### EXPOSÉ DE L'INVENTION

L'un des buts de l'invention est donc de remédier aux inconvénients de l'art antérieur en proposant un ensemble de motorisation et d'entrainement d'une couverture d'un bassin de piscine, c'est-à-dire en milieu humide, par exemple à proximité ou immergé dans la piscine, comprenant un groupe motoréducteur présentant des moyens pour compter son nombre de tours, d'une manière simple, peu encombrante et peu coûteuse, sans être sensible aux surtensions (foudre, instabilité du secteur, etc.).

A cet effet, afin de résoudre le problème posé, il a été mis au point un ensemble de motorisation et d'entrainement d'une couverture d'un bassin de piscine, conforme à l'objet de la revendication 1.

Selon l'invention, les moyens de détection comprennent une pluralité d'aimants positionnés sur l'élément rotatif, et un interrupteur à lames souples dont deux contacts sont magnétisés et placés dans une ampoule ou une enveloppe plastique contenant du diazote, par exemple, aussi connu sous l'acronyme « ILS » pour Interrupteur à Lames Souples, ou capteur « REED ». L'interrupteur étant positionné sur une partie fixe de l'ensemble de motorisation, en regard des aimants lorsque l'élément rotatif est entrainé en rotation. L'interrupteur est destiné à être actionné lors du passage des aimants devant l'interrupteur pour compter le nombre de tours de l'élément rotatif et déterminer des fins de course de la couverture du bassin de piscine.

L'interrupteur se ferme de la même façon qu'un capteur mécanique, à savoir par ouverture et fermeture d'un circuit électrique. La différence principale c'est que le mouvement du microcontact est généré par une variation d'un champ magnétique et non pas par un ressort. De cette manière, sa fiabilité et sa durée de vie sont optimales. Il n'est par ailleurs pas soumis aux surtensions, à la foudre, etc., et convient donc parfaitement pour être à proximité ou immergé dans une piscine par exemple.

Selon l'invention, une pluralité d'aimants sont positionnés sur l'élément rotatif, régulièrement répartis autour de l'axe de rotation de l'élément rotatif.

Le passage des aimants devant l'interrupteur à lames souples permet d'actionner l'interrupteur. Etant donné que le mouvement est rotatif, le nombre d'aimants utilisés donnera la précision du codeur : ex. 12 aimants donnent un codeur qui détecte un déplacement angulaire de 30°. Ceci permet également de compter le nombre de tours de l'élément rotatif du motoréducteur.

Selon l'invention, l'élément rotatif est au moins l'un des arbres de sortie du motoréducteur.

Dans cette configuration, une bague est fixée autour de l'arbre de sortie, et présente une paroi recevant le ou les aimants.

L'agencement de la bague pourvue d'aimants et de l'interrupteur à lames souples est très peu encombrant, peu coûteux et offre un signal électrique optimal qui permet alors d'augmenter la vitesse de rotation de l'élément rotatif.

Différents agencements sont possibles. Selon une première forme de réalisation conforme à l'invention, les aimants sont reçus sur une paroi frontale de la bague, orthogonale à l'arbre de sortie, de sorte que les aimants sont orientés coaxialement à l'arbre de sortie.

En alternative, selon un mode de réalisation non conforme à l'invention, les aimants peuvent être reçus sur une paroi latérale de la bague, parallèle à l'arbre, de sorte que les aimants sont orientés radialement par rapport à l'arbre de sortie.

Le ou les aimants sont positionnés sur un élément rotatif du motoréducteur, et peut aussi bien, sans sortir du cadre de l'invention, sur au moins l'un des arbres de sortie, ou par exemple sur le rotor du moteur électrique pour avoir une précision beaucoup plus fine, notamment « n » fois plus importante, « n » étant le rapport de réduction du réducteur. Dans cette dernière configuration, une bague pourvue d'aimants peut par exemple prolonger le rotor du moteur électrique.

Selon une autre forme de réalisation non conforme à l'invention, ce n'est non pas l'arbre de sortie, mais le flasque qui est mobile et qui est assujetti à la couverture du bassin de piscine entraînée en rotation par le groupe motoréducteur. Dans cette configuration, le flasque est l'élément rotatif sur lequel sont positionnés les aimants.

L'interrupteur à lames souples est, quant à lui, monté sur une quelconque partie fixe en regard des aimants, tel que par exemple noyé dans une bride fixe autour de l'arbre de sortie.

Dans le cas où ce n'est pas le flasque mais où c'est l'arbre de sortie qui est assujetti à la couverture du bassin de piscine entraînée en rotation par le groupe motoréducteur, l'interrupteur peut être fixé ou noyé dans le flasque.

Le réglage de la distance entre les aimants et l'interrupteur à lames souples pourra être fait en fonction de la puissance des aimants en utilisant des usinages spécifiques, des butées mécaniques, des fixations pas vissage, du collage dans un siège usiné à cette fin, etc.

### DESCRIPTION SOMMAIRE DES FIGURES

D'autres avantages et caractéristiques techniques ressortiront mieux de la description qui va suivre du motoréducteur selon l'invention, donnée à titre d'exemple non limitatif à partir des figures annexées, dans lesquelles :
[Fig. 1] la figure 1 est une vue de détail d'une extrémité de l'ensemble de motorisation selon un mode de réalisation non conforme à l'invention, en coupe longitudinale, illustrant une bague pourvue d'aimants orientés radialement et montée autour d'un arbre de sortie mobile ;
[Fig. 2] la figure 2 est une vue en perspective de l'agencement de la bague de la figure 1 ;
[Fig. 3] la figure 3 est une vue de détail d'une extrémité de l'ensemble de motorisation selon l'invention, en coupe longitudinale, illustrant la bague pourvue d'aimants orientés axialement ;
[Fig. 4] la figure 4 est une vue en perspective de l'agencement de la bague de la figure 3 ;
[Fig. 5] la figure 5 est une vue de détail d'une extrémité de l'ensemble de motorisation selon un mode de réalisation non conforme à l'invention, en coupe longitudinale, illustrant un flasque rotatif pourvu d'aimants orientés axialement.

### DESCRIPTION DÉTAILLÉE DE L'INVENTION

L'invention concerne un ensemble de motorisation et d'entraînement d'une couverture d'un bassin de piscine comportant un groupe motoréducteur (1) comprenant, d'une manière connue, un moteur électrique (1a), un réducteur, au moins un arbre de sortie (2), au moins un flasque (3) latéral, un corps fixe (4) portant le moteur électrique (1a) et le réducteur, et des moyens de détection de la position du corps fixe (4) par rapport à un élément rotatif du groupe motoréducteur (1) afin de déterminer le nombre de tours réalisés par le groupe motoréducteur (1).

En fonction de l'application, différents montage sont possibles.

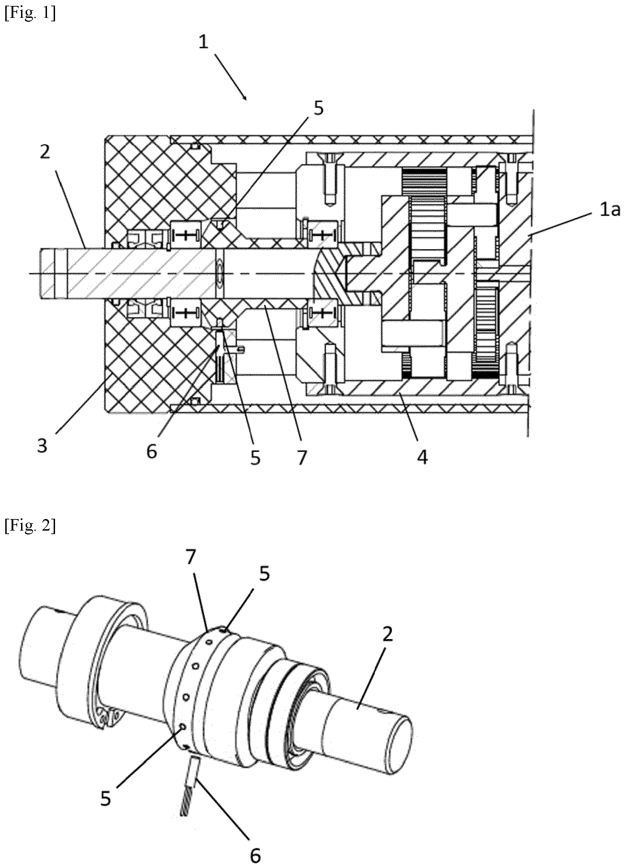

Selon un premier montage, illustré aux figures 1 à 4, le flasque (3) est fixe, et l'arbre de sortie (2) est rotatif et est assujetti à la couverture d'un bassin de piscine entraînée en rotation par le groupe motoréducteur (1). Par exemple, l'arbre de sortie (2) peut être monté à l'intérieur d'un rouleau sur lequel est enroulée la couverture du bassin de piscine.

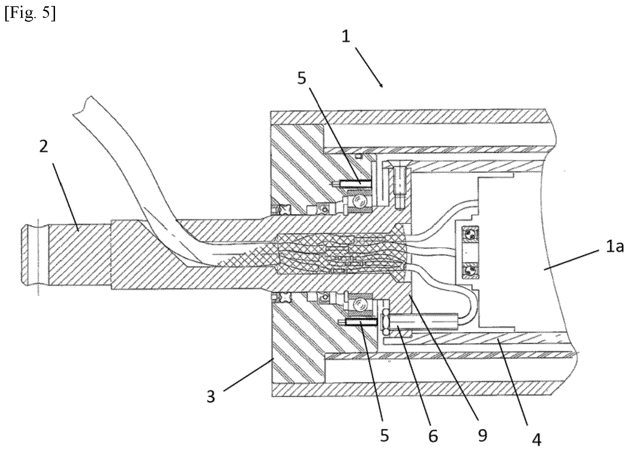

Selon un deuxième montage non conforme à l'invention et illustré à la figure 5, l'arbre de sortie (2) est fixe, et c'est le flasque (3) qui est rotatif et assujetti à la couverture du bassin de piscine entraînée en rotation par le groupe motoréducteur (1).

Par exemple, le flasque (3) peut être monté à l'intérieur d'un rouleau sur lequel est enroulée la couverture du bassin de piscine.

Dans cette configuration, le flasque (3) est monté avec capacité de rotation par rapport à l'arbre de sortie (2) du motoréducteur (1) porté par le corps fixe (4).

Cet ensemble motoréducteur (1) n'est pas décrit plus en détail, car parfaitement connu pour un homme du métier, comme il ressort par exemple, de l'enseignement du brevet précité FR 3 017 892.

Les moyens de détection comprennent une pluralité d'aimants (5) positionnés sur l'élément rotatif, et un interrupteur (6) à lames souples positionné sur une partie fixe de l'ensemble de motorisation, en regard des aimants (5) lorsque l'élément rotatif est entrainé en rotation. De cette manière, l'interrupteur (6) est destiné à être actionné lors du passage des aimants (5) devant l'interrupteur (6) pour permettre de compter le nombre de tours de l'élément rotatif. Plus précisément, il s'agit d'un interrupteur (6) à lames souples dont deux contacts sont magnétisés et placés dans une ampoule ou une enveloppe plastique contenant du diazote, par exemple, aussi connu sous l'acronyme « ILS » pour Interrupteur à Lames Souples, ou capteur « REED ».

Plus précisément, dans l'exemple des figures 1 à 4 avec le flasque (3) fixe et l'arbre de sortie (2) rotatif, le motoréducteur (1) comprend par exemple une bague (7) fixée autour d'un élément rotatif du motoréducteur (1), tel qu'autour de l'arbre de sortie (2) lui-même.

La bague (7) présente une paroi, latérale ou frontale, recevant une pluralité d'aimants (5) régulièrement répartis autour de l'arbre de sortie (2).

Lors de la rotation de l'arbre de sortie (2), les aimants (5) sont destinés à passer successivement devant l'interrupteur (6) à lames souples, actionné par le passage desdits aimants (5), pour connaitre la position de l'arbre de sortie (2) et pour compter le nombre de tours utilisés par exemple pour déterminer les fins de course d'une couverture d'un bassin de piscine.

L'interrupteur (6) à lames souples est positionné sur une partie fixe du motoréducteur (1), en regard, alternativement, de chaque aimant (5) lorsque l'arbre de sortie (2) est entrainé en rotation.

En référence aux figures 1 et 2, selon un mode de réalisation non conforme à l'invention, lorsque les aimants (5) sont reçus sur la paroi latérale de la bague (7), parallèle à l'arbre de sortie (2), les aimants (5) sont orientés radialement par rapport à l'arbre de sortie (2). L'interrupteur (6) est alors positionné en regard, et orienté radialement.

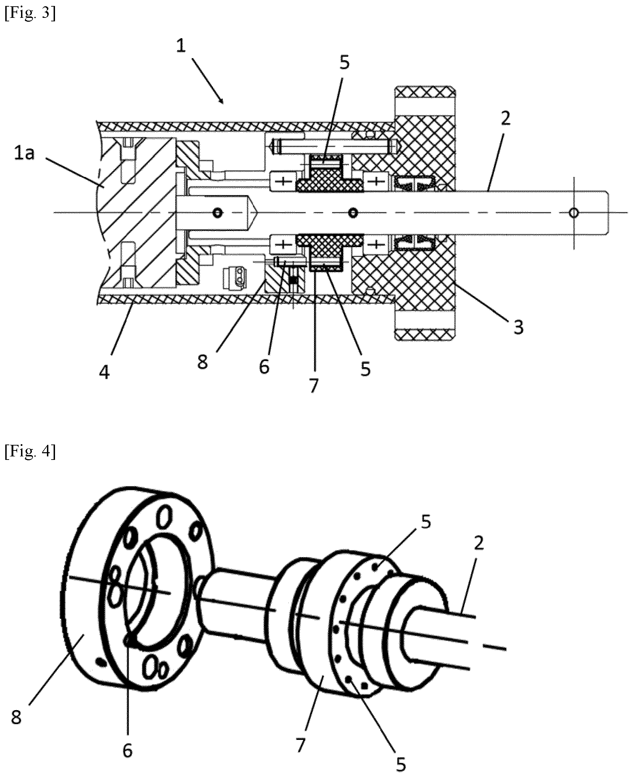

Selon l'invention, et en référence aux figures 3 et 4, lorsque les aimants (5) sont reçus sur la paroi frontale de la bague (7), orthogonale à l'arbre de sortie (2), les aimants (5) sont orientés coaxialement à l'arbre de sortie (2). L'interrupteur (6) est alors positionné en regard, et orienté axialement.

Dans l'une ou l'autre des configurations, l'interrupteur (6) est monté sur une quelconque partie fixe en regard du passage des aimants (5), tel que par exemple fixé ou noyé dans une bride (8) fixe positionnée autour de l'arbre de sortie (2), ou bien fixé ou noyé dans le flasque (3) latéral.

Selon la forme de réalisation illustrée à la figure 5, les aimants (5) sont positionnés sur le flasque (3), régulièrement répartis autour de l'axe de rotation du flasque (3). Les aimants (5) sont notamment orientés axialement.

L'interrupteur (6) à lames souples est positionné en regard des aimants (5), par exemple fixé ou noyé dans un support ou une bride (9), par exemple solidaire de l'arbre de sortie (2) fixe, de façon à pouvoir sortir facilement le câble d'alimentation électrique de l'interrupteur (6) par l'intérieur de l'arbre de sortie (2).

Il ressort de ce qui précède que l'invention fournir bien un ensemble de motorisation et d'entraînement d'une couverture d'un bassin de piscine avec un groupe motoréducteur présentant des moyens pour compter son nombre de tours, d'une manière simple, peu encombrante et peu coûteuse, et qui peut être parfaitement utilisé en milieu humide, par exemple à proximité ou immergé dans la piscine.

## Revendications

1. Ensemble de motorisation et d'entrainement pour une couverture d'un bassin de piscine, l'ensemble comportant au moins un groupe motoréducteur (1) comprenant un moteur électrique (1a), un réducteur, au moins un arbre de sortie (2), au moins un flasque (3), l'arbre de sortie (2) étant assujetti à la couverture du bassin de piscine, entraînée en rotation par le groupe motoréducteur (1), un corps fixe (4) portant le moteur électrique (1a) et le réducteur, et des moyens de détection de la position du corps fixe (4) par rapport à un élément rotatif du groupe motoréducteur (1) afin de déterminer le nombre de tours réalisés par le groupe motoréducteur (1) et de déterminer des fins de course de la couverture du bassin de piscine, les moyens de détection comprennent des aimants (5), et un interrupteur (6) magnétique à lames souples dont deux contacts sont magnétisés et placés dans une ampoule ou une enveloppe plastique contenant du diazote, l'interrupteur (6) est positionné sur une partie fixe de l'ensemble de motorisation et est destiné à être actionné par les aimants (5) pour compter le nombre de tours de l'élément rotatif, en ce que l'élément rotatif est l'arbre de sortie (2) et déterminer des fins de course de la couverture du bassin de piscine, ***caractérisé* en ce qu'**une pluralité d'aimants (5) est positionnée sur l'élément rotatif, régulièrement répartis autour de l'axe de rotation de l'élément rotatif de sorte à passer devant l'interrupteur pour l'actionner lorsque l'élément rotatif est entrainé en rotation, ***et en ce qu***'une bague (7) est fixée autour de l'arbre de sortie (2), la bague (7) présente une paroi frontale recevant les aimants (5), orthogonale à l'arbre de sortie (2), de sorte que les aimants (5) sont orientés coaxialement à l'arbre de sortie (2), ***et en ce que*** l'interrupteur (6) est fixé ou noyé dans le flasque (3), ou fixé ou noyé dans une bride (8) fixe positionnée autour de l'arbre de sortie (2) avec la bague (7) étant agencée axialement entre la bride (8) et le flasque (3).

2. Ensemble de motorisation selon la revendication 1, ***caractérisé* en ce que** l'interrupteur (6) à lames souples est fixé au flasque (3).

3. Ensemble de motorisation selon la revendication 1, ***caractérisé* en ce que** l'interrupteur (6) à lames souples est fixé à une bride (8, 9).

## Patentansprüche

1. Antriebseinheit für die Abdeckung eines Schwimmbeckens, wobei die Antriebseinheit mindestens einen Getriebemotor (1) umfasst, der einen Elektromotor (1a), ein Getriebe, mindestens eine Abtriebswelle (2) und mindestens einen Flansch (3) umfasst, wobei die Abtriebswelle (2) mit der Abdeckung des Schwimmbeckens verbunden ist, die durch den Getriebemotor (1) in Rotation versetzt wird, einen festen Körper (4), der den Elektromotor (1a) und das Getriebe trägt, sowie Mittel zur Erkennung der Position des festen Körpers (4) relativ zu einem rotierenden Element des Getriebemotors (1), um die Anzahl der Umdrehungen des Getriebemotors (1) und die Endpositionen der Abdeckung des Schwimmbeckens zu bestimmen. Die Erkennungsmittel umfassen Magnete (5) und einen magnetischen Reed-Schalter (6), dessen zwei Kontakte magnetisiert und in einer Kapsel oder einem Kunststoffgehäuse untergebracht sind, das Stickstoff enthält. Der Schalter (6) ist an einem festen Teil der Antriebseinheit positioniert und dazu bestimmt, von den Magneten (5) betätigt zu werden, um die Anzahl der Umdrehungen des rotierenden Elements zu zählen, wobei das rotierende Element die Abtriebswelle (2) ist, und um die Endpositionen der Abdeckung des Schwimmbeckens zu bestimmen. Dadurch zeichnet sich die Erfindung dadurch aus, dass eine Mehrzahl von Magneten (5) auf dem rotierenden Element positioniert und gleichmäßig um die Rotationsachse des rotierenden Elements verteilt ist, sodass sie am Schalter vorbeigehen und diesen betätigen, wenn das rotierende Element in Rotation versetzt wird. Ferner ist ein Ring (7) um die Abtriebswelle (2) befestigt, wobei der Ring (7) eine Stirnwand aufweist, die die Magnete (5) aufnimmt, orthogonal zur Abtriebswelle (2), sodass die Magnete (5) koaxial zur Abtriebswelle (2) ausgerichtet sind. Der Schalter (6) ist entweder am Flansch (3) befestigt oder darin eingebettet oder an einem festen Flansch (8) befestigt oder darin eingebettet, der um die Abtriebswelle (2) herum positioniert ist, wobei der Ring (7) axial zwischen dem Flansch (8) und dem Flansch (3) angeordnet ist.

2. Antriebseinheit nach Anspruch 1, **dadurch gekennzeichnet, dass** der Reed-Schalter (6) am Flansch (3) befestigt ist.

3. Antriebseinheit nach Anspruch 1, **dadurch gekennzeichnet, dass** der Reed-Schalter (6) an einem Flansch (8, 9) befestigt ist.

## Claims

1. A motorization and drive system for a pool cover, the system comprising at least one geared motor (1) including an electric motor (1a), a reducer, at least one output shaft (2), at least one flange (3), the output shaft (2) being attached to the pool cover, driven in rotation by the geared motor (1), a fixed body (4) housing the electric motor (1a) and the reducer, and detection means for detecting the position of the fixed body (4) relative to a rotating element of the geared motor (1) in order to determine the number of rotations performed by the geared motor (1) and to determine the end positions of the pool cover, the detection means comprising magnets (5) and a magnetic reed switch (6) with two magnetized contacts enclosed in a capsule or plastic envelope containing nitrogen, the switch (6) being positioned on a fixed part of the motorization system and designed to be activated by the magnets (5) to count the number of rotations of the rotating element, with the rotating element being the output shaft (2) to determine the end positions of the pool cover, **characterized in that** a plurality of magnets (5) is positioned on the rotating element, evenly distributed around the axis of rotation of the rotating element so as to pass in front of the switch to activate it when the rotating element is driven in rotation, and **in that** a ring (7) is fixed around the output shaft (2), the ring (7) having a frontal wall that holds the magnets (5), orthogonal to the output shaft (2), so that the magnets (5) are oriented coaxially to the output shaft (2), and **in that** the switch (6) is fixed or embedded in the flange (3), or fixed or embedded in a fixed flange (8) positioned around the output shaft (2), with the ring (7) arranged axially between the flange (8) and the flange (3).

2. The motorization system according to claim 1, **characterized in that** the reed switch (6) is fixed to the flange (3).

3. The motorization system according to claim 1, **characterized in that** the reed switch (6) is fixed to a flange (8, 9).
